(19) Europäisches Patentamt / European Patent Office / Office européen des brevets

(11) **EP 2 944 989 A1**

(12) **EUROPEAN PATENT APPLICATION**
published in accordance with Art. 153(4) EPC

(43) Date of publication:
**18.11.2015 Bulletin 2015/47**

(21) Application number: **14738268.3**

(22) Date of filing: **10.01.2014**

(51) Int Cl.:
*G02B 6/04* (2006.01)  *G02B 6/02* (2006.01)
*G02B 6/38* (2006.01)  *G02B 6/44* (2006.01)

(86) International application number:
**PCT/JP2014/050353**

(87) International publication number:
**WO 2014/109395 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.01.2013 JP 2013002616**

(71) Applicant: **Sumitomo Electric Industries, Ltd.**
**Chuo-ku**
**Osaka-shi**
**Osaka 541-0041 (JP)**

(72) Inventors:
• **SASAOKA Eisuke**
  **Yokohama-shi**
  **Kanagawa 244-8588 (JP)**
• **HAYASHI Tetsuya**
  **Yokohama-shi**
  **Kanagawa 244-8588 (JP)**
• **SHIMAKAWA Osamu**
  **Yokohama-shi**
  **Kanagawa 244-8588 (JP)**

(74) Representative: **Hoffmann Eitle**
**Patent- und Rechtsanwälte PartmbB**
**Arabellastraße 30**
**81925 München (DE)**

(54) **OPTICAL COMPONENT AND OPTICAL COMMUNICATION SYSTEM**

(57)    An optical component according to an embodiment of the present invention is constructed of a plurality of MCFs each having the same core constellation structure and among the plurality of MCFs, a maximum deviation of a core pitch between neighboring cores and a maximum deviation of a spot size of a fundamental mode at an operating wavelength satisfy a specific relation, thereby suppressing structural variation so as to keep a splice loss not more than 1 dB.

*Fig.4*

EP 2 944 989 A1

**Description**

BACKGROUND OF THE INVENTION

Field of the Invention

The present invention relates to an optical component and an optical communication system incorporating the same.

Related Background Art

In the optical communication systems, for implementing large-capacity optical communication, an optical fiber cable has been constructed in higher density of optical fibers by housing a larger number of single-core optical fibers in one cable jacket, as disclosed in Non Patent Literature 1 below. For achieving implementation of much higher density of optical transmission line, the optical communication systems are expected to be constructed with application of a multi-core optical fiber cable in which a plurality of multi-core optical fibers are housed in a single cable jacket. Optical connection between multi-core optical fiber cables is also needed in order to perform long-haul optical communication.

Citation List

Non Patent Literature 1: NTT Technical Journal 2012.9, pp.88-89

SUMMARY OF THE INVENTION

Technical Problem

The Inventors conducted research on the optical communication systems to which the multi-core optical fiber cables were applied as optical component and found the problem as described below. Namely, there exist no previously-known multi-core optical fiber cables constructed by also taking mutual connectivity (capability of connecting multi-core optical fiber cables to each other with low loss) into consideration.

The present invention has been accomplished in order to solve the problem as described above and it is an object of the present invention to provide an optical component including a plurality of optical fiber lines comprised of a plurality of multi-core optical fibers with excellent mutual connectivity and an optical communication system incorporating the optical component. The optical component in the present specification embraces a multi-core optical fiber cable (optical fiber cable hereinafter), a multi-core optical fiber ribbon (optical fiber ribbon hereinafter), a multi-core optical fiber connector (optical connector hereinafter), and so on each of which has the foregoing multi-core optical fibers (MCFs hereinafter) as optical transmission lines.

Solution to the Problem

A first aspect of the embodiment of the present invention is an optical component having a plurality of MCFs, the optical component satisfying at least any one of relational expressions (1) to (4) below:

$$\Delta\Lambda^2/2.2^2 + \Delta w^2/1.7^2 \leq 1 \qquad (1);$$

$$\Delta\Lambda^2/1.6^2 + \Delta w^2/1.3^2 \leq 1 \qquad (2);$$

$$\Delta\Lambda^2/0.9^2 + \Delta w^2/0.9^2 \leq 1 \qquad (3);$$

$$\Delta\Lambda^2/0.6^2 + \Delta w^2/0.7^2 \leq 1 \qquad (4),$$

where in a core array in each of the plurality of MCFs, $\Delta\Lambda$ ($\mu$m) represents a maximum deviation of a core center pitch (core pitch hereinafter) between adjacent cores located at closest positions (neighboring cores hereinafter) and $\Delta w$ ($\mu$m)

a maximum deviation of a spot size of a fundamental mode at an operating wavelength.

A second aspect applicable to the first aspect is preferably the optical component wherein a core structure and the core array in each of the plurality of MCFs are such that a deviation from a target position, of a position of each core with respect to a fiber center axis is not more than a predetermined value and a deviation from a target size, of the spot size in each core is not more than a predetermined value. A third aspect applicable to at least either one of the first and second aspects is preferably the optical component wherein each of the plurality of MCFs has a core constellation structure identical with that of another MCF to be connected thereto, and has a marker for confirmation of an end face position of the MCF.

A fourth aspect applicable to at least any one of the first to third aspects is preferably the optical component wherein the core pitch between the neighboring cores is not more than 1.1 times a minimum core center-center distance in the core array. As a fifth aspect applicable to at least any one of the first to fourth aspects, each of the plurality of MCFs may have a core constellation structure of a lattice pattern. A sixth aspect applicable to at least any one of the first to fifth aspects is preferably the optical component wherein in each of the plurality of MCFs, an optical characteristic at a wavelength of 1310 nm is such that each of the plurality of cores has a mode field diameter of not less than 8.0 $\mu$m and not more than 10.1 $\mu$m or such that an average value of mode field diameters of all the cores is not less than 8.6 $\mu$m and not more than 9.5 $\mu$m. A seventh aspect applicable to at least any one of the first to sixth aspects is preferably the optical component wherein in each of the plurality of MCFs, a cable cutoff wavelength of each of the plurality of cores is not more than 1260 nm. An eighth aspect applicable to at least any one of the first to seventh aspects is preferably the optical component wherein in each of the plurality of MCFs, each of the plurality of cores has a bending loss of not more than 0.1 dB in a winding state of 100 turns in a bending radius of 30 mm, as an optical characteristic at a wavelength of 1550 nm. A ninth aspect applicable to at least any one of the first to eighth aspects is preferably the optical component wherein the operating wavelength is any one of a 0.85 $\mu$m band (from 0.80 $\mu$m to 0.90 $\mu$m), a 1.31 $\mu$m band (from 1.26 $\mu$m to 1.36 $\mu$m), and a 1.55 $\mu$m band (from 1.53 $\mu$m to 1.57 $\mu$m). As a tenth aspect applicable to at least any one of the first to ninth aspects, the optical component may be an optical fiber line internally housing the plurality of MCFs, or, a line wherein a plurality of optical fiber lines each internally housing the plurality of MCFs are optically connected.

As an eleventh aspect applicable to at least any one of the first to ninth aspects, the optical component may comprise a first retention structure for retaining each of optical fiber lines, the optical fiber lines each being constructed by optically connecting the plurality of MCFs and extending along a predetermined longitudinal direction, in a state in which the first retention structure maintains a positional relation on a plane perpendicular to the longitudinal direction, of each of these optical fiber lines. As a twelfth aspect applicable to the eleventh aspect, a core constellation structure of each of a plurality of MCFs constituting any optical fiber line out of the plurality of optical fiber lines may be different from a core constellation structure of each of a plurality of MCFs constituting another optical fiber line out of the plurality of optical fiber lines. As a thirteenth aspect applicable to at least either one of the eleventh and twelfth aspects, the first retention structure includes a resin material for retaining a space between at least adjacent optical fiber lines out of the plurality of optical fiber lines.

As a fourteenth aspect applicable to at least any one of the eleventh to thirteenth aspects, the optical component may comprise a jacket internally housing each of the plurality of optical fiber lines, together with the first retention structure. As a fifteenth aspect applicable to the fourteenth aspect, the optical component may comprise a second retention structure for retaining the first retention structure housed in the jacket with the positional relation of each of the plurality of optical fiber lines being retained, at a predetermined position in the jacket.

As a sixteenth aspect applicable to at least any one of the first to ninth aspects, the optical component may be a connection component for retaining ends of the plurality of MCFs each extending along a predetermined longitudinal direction, in a state in which the connection component maintains a positional relation of the ends on a plane perpendicular to the longitudinal direction. As a seventeenth aspect applicable to the sixteenth aspect, the connection component retains each of the plurality of MCFs in an aligned state of an orientation, a height, and a pitch of a core constellation structure. As an eighteenth aspect applicable to at least either one of the sixteenth and seventeenth aspects, the connection component may include a plurality of holes or grooves for retaining the plurality of MCFs.

A nineteenth aspect applicable to the seventeenth aspect is preferably the optical component wherein core constellation structures in the plurality of MCFs are substantially identical and wherein the connection component satisfies at least any one of relational expressions (5) to (8) below:

$$\Delta\Lambda_{cc}{}^{2}/2.2^{2} + \Delta w_{a}{}^{2}/1.7^{2} \leq 1 \qquad (5);$$

$$\Delta\Lambda_{cc}{}^{2}/1.6^{2} + \Delta w_{a}{}^{2}/1.3^{2} \leq 1 \qquad (6);$$

$$\Delta\Lambda_{cc}^{2}/0.9^{2} + \Delta w_{a}^{2}/0.9^{2} \leq 1 \qquad (7);$$

$$\Delta\Lambda_{cc}^{2}/0.6^{2} + \Delta w_{a}^{2}/0.7^{2} \leq 1 \qquad (8),$$

where $\Delta\Lambda_{cc}$ ($\mu$m) represents a maximum deviation of a center pitch between corresponding cores between the MCFs of the substantially identical core constellation structure and $\Delta w_{a}$ ($\mu$m) a maximum deviation of the spot size in the entire optical component.

A twentieth aspect applicable to at least either one of the sixteenth and seventeenth aspects is preferably the optical component wherein core constellation structures in the plurality of MCFs are substantially identical and wherein the connection component satisfies at least any one of relational expressions (9) to (13) below:

$$(2\Delta\Lambda_{d}+1.0)^{2}/2.2^{2} + \Delta w^{2}/1.7^{2} \leq 1 \qquad (9);$$

$$(2\Delta\Lambda_{d}+1.0)^{2}/1.6^{2} + \Delta w^{2}/1.3^{2} \leq 1 \qquad (10);$$

$$(2\Delta\Lambda_{d}+0.5)^{2}/2.2^{2} + \Delta w^{2}/1.7^{2} \leq 1 \qquad (11);$$

$$(2\Delta\Lambda_{d}+0.5)^{2}/1.6^{2} + \Delta w^{2}/1.3^{2} \leq 1 \qquad (12);$$

$$(2\Delta\Lambda_{d}+0.5)^{2}/0.9^{2} + \Delta w^{2}/0.9^{2} \leq 1 \qquad (13),$$

where $\Delta\Lambda_{d}$ ($\mu$m) represents a maximum value of a deviation from a designed position of a center of each core.

An optical communication system according to a twenty first aspect comprises the optical component according to at least any one of the first to twentieth aspects, as an optical transmission line or as an optical passive element.

Effect of the Invention

According to the embodiment of the present invention, we can obtain the optical component and the optical communication system with excellent mutual connectivity between optical fibers.

BRIEF DESCRIPTION OF THE DRAWINGS

Fig. 1 is a drawing showing various examples of typical structure of an optical communication system according to an embodiment of the present invention;

Figs. 2A to 2F are drawings for illustrating a spliced state of a plurality of multi-core optical fibers constituting an optical fiber line and an example of core constellation structure;

Figs. 3A and 3B are drawings for illustrating an example of a structure of an MCF and a splice structure between MCPs;

Fig. 4 is a graph showing the result of provisional calculation of dependency of splice loss on difference of spot size w and misalignment;

Fig. 5 is a table showing a list of relationship among respective intercepts of misalignment and difference of w, and splice loss;

Figs. 6A to 6C are cross-sectional views showing various examples of typical structures of optical fiber ribbons as optical components according to the embodiment of the present invention;

Fig. 7 is a cross-sectional view showing an example of a typical structure of an optical fiber cable as an optical component according to the embodiment of the present invention;

Figs. 8A and 8B are cross-sectional views showing other examples of structures of optical fiber cables as optical components according to the embodiment of the present invention;

Figs. 9A and 9B are cross-sectional views showing an example of a typical structure and a connection structure of an optical connector as an optical component according to the embodiment of the present invention; and
Figs. 10A and 10B are cross-sectional views showing another example of a typical structure of an optical connector as an optical component according to the embodiment of the present invention.

DESCRIPTION OF THE PREFERRED EMBODIMENTS

Respective embodiments of the optical component and the optical communication system according to the present invention will be described below in detail with reference to the accompanying drawings. In the description of the drawings identical portions and identical elements will be denoted by the same reference signs, without redundant description.

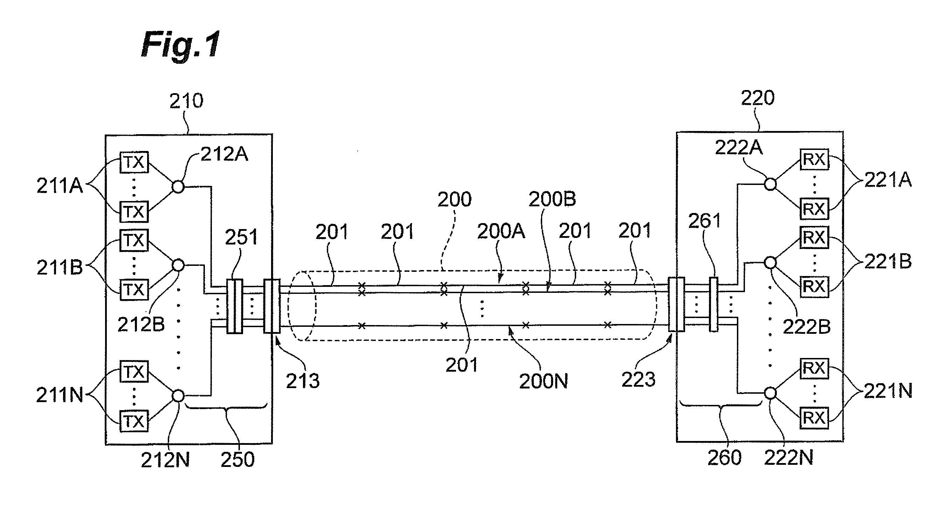

Fig. 1 is a drawing showing various examples of typical structure of the optical communication system according to the embodiment of the present invention and shows the structure of the optical communication system including an optical transmission line 200 composed of a plurality of optical fiber lines 200A to 200N, as optical component. The "optical fiber line" herein refers to an aggregate including a plurality of multi-core optical fibers, such as an optical fiber cable or an optical fiber ribbon. The "optical component" herein covers an optical fiber line itself, a line in which a plurality of optical fiber lines are optically connected, or a line in a module state including the optical fiber line and a connection component such as a connector.

The optical communication system in Fig. 1 has a transmission station 210, a reception station 220, and the optical transmission line 200 arranged between the transmission station 210 and the reception station 220. The optical transmission line 200 includes a plurality of optical fiber lines 200A to 200N. Each of the optical fiber lines 200A to 200N includes a plurality of MCFs 201 each having the same core array structure, and is constructed by optically connecting these MCFs 201 to each other. As a configuration corresponding to the optical fiber line 200A, a plurality of signal light sources 211A (TX) are arranged in the transmission station 210 and signal light beams from these signal light sources 211A (propagating in respective single-core optical fibers) are coupled to respective cores of the MCF through an optical joint 212A. Similarly, as configurations corresponding to the respective optical fiber lines 200B to 200N, a plurality of signal light sources 211B (TX) to 211N (TX) are arranged in the transmission station 210 and signal light beams from the signal light sources 211B to 211N (propagating in respective single-core optical fibers) are coupled to respective cores of the corresponding MCFs through optical joints 212B to 212N. An optical passive element 250 is disposed between an optical connector 213 attached to ends of the optical fiber lines 200A to 200N and the optical joints 212A to 212N. The optical passive component 250 includes an optical connector 251 for connecting the optical joints 212A-212N and the optical fiber lines 200A-200N through the optical connector 213, a plurality of MCFs arranged in parallel between the optical joints 212A-212N and the optical connector 251, and a plurality of MCFs arranged in parallel between the optical connector 251 and the optical connector 213. Furthermore, as a configuration corresponding to the optical fiber line 200A, a plurality of receivers 221A (RX) are arranged in the reception station 220. A single-core optical fiber is connected to each of the receivers 221 A and the single-core optical fibers are optically connected to the respective cores of the corresponding MCF through an optical branching device 222A. Similarly, as configurations corresponding to the respective optical fiber lines 200B to 200N, a plurality of receivers 221B (RX) to 221N (RX) are arranged in the reception station 220 and single-core optical fibers connected to the receivers 221B-221N are coupled to the respective cores of the corresponding MCFs through optical joints 222B to 222N. An optical passive element 260 is disposed between an optical connector 223 attached to ends of the optical fiber lines 200A-200N of the optical transmission line 200 and the optical joints 222A-222N. The optical passive element 260 includes an optical connector 261 for connecting the optical joints 222A-222N and the optical fiber lines 200A-200N through the optical connector 223, a plurality of MCFs arranged in parallel between the optical connector 223 and the optical connector 261, and a plurality of MCFs arranged in parallel between the optical connector 261 and the optical joints 222A-222N. In the configuration shown in Fig. 1, at least any one of the optical transmission line 200 and the optical passive elements 250, 260 can function as an optical component in the present embodiment.

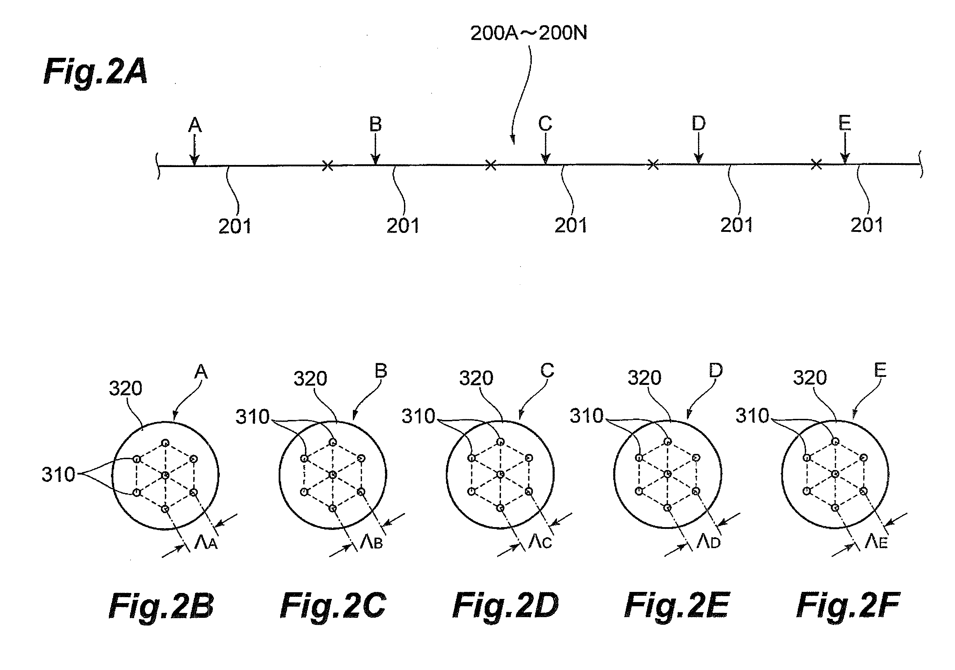

Each of the optical fiber lines 200A-200N in the optical transmission line 200 has a structure in which a plurality of MCFs 201 having the same core constellation structure are cascaded, as shown in Fig. 2A. Figs. 2B to 2F show cross-sectional structures of the MCFs 201 at positions designated by arrows A to E, respectively, in Fig. 2A.

As shown in Figs. 2B to 2F, each of the MCFs 201 constituting each of the optical fiber lines 200A-200N includes a plurality of sets of neighboring cores whose core pitch $\Lambda_A$-$\Lambda_E$ defined by a center-center distance is not more than 1.1 times a minimum center-center distance, out of cores 310 adjacent through a common cladding 320 on a cross section. Therefore, in the case where the core constellation structure shown in Fig. 2B is the hexagonal close-packed lattice (including a configuration obtained by combining a plurality of triangular lattices of minimum units), we can recognize the neighboring core pitches of $\Lambda_A(1)$ to $\Lambda_A(12)$ in the MCF 201 at point A. The numbers 1-12 in parentheses represent the neighboring core pitches indicated by twelve dashed lines. The same also applies to the description hereinafter. Similarly, we can recognize the neighboring core pitches of $\Lambda_B(1)$ to $A_B(12)$ in Fig. 2C in the MCF 201 at point B, the neighboring core pitches of $\Lambda_C(1)$ to $A_C(12)$ in Fig. 2D in the MCF 201 at point C, the neighboring core pitches of $\Lambda_D(1)$

to $\Lambda_D(12)$ in Fig. 2E in the MCF 201 at point D, and the neighboring core pitches of $\Lambda_E(1)$ to $\Lambda_E(12)$ in Fig. 2F in the MCF 201 at point E.

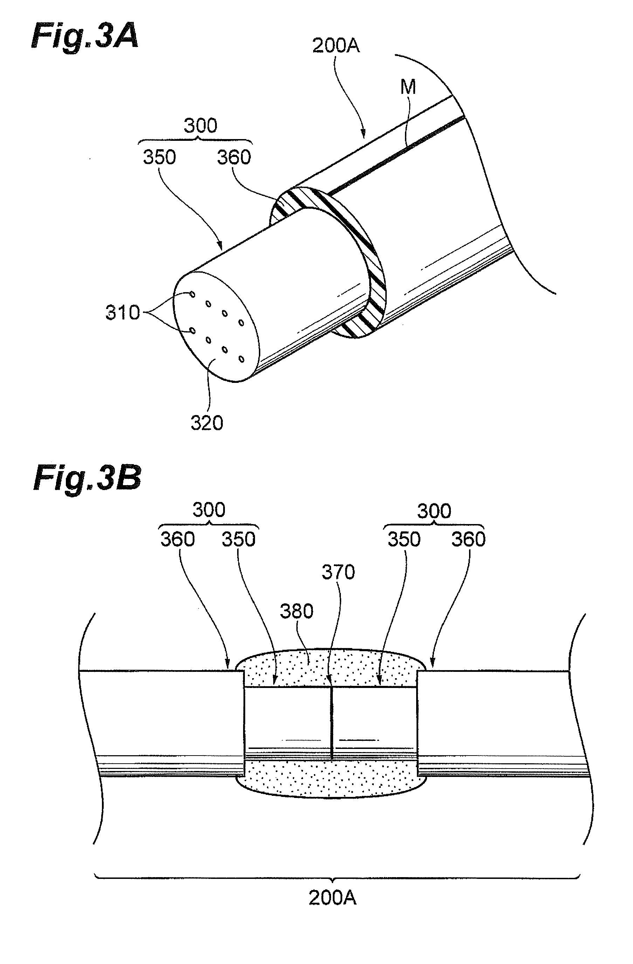

Although Figs. 2B to 2F show the hexagonal close-packed lattice with the minimum units of triangular lattices as the core constellation structure of each of the MCFs 201 constituting one optical fiber line, the core constellation structure to be employed may be one in a lattice pattern with the minimum units of rectangular lattices. Figs. 3A and 3B show a connection structure between MCFs. The MCF 300 shown in Fig. 3A is the MCF employing the core constellation structure of the lattice pattern with the minimum units of rectangular lattices, and corresponds to the MCF 201 shown in Fig. 1. The MCF 300 has a silica glass fiber 350 without resin coat 360 (which will be referred to hereinafter as glass fiber), and the resin coat 360 provided on the outer peripheral surface of the glass fiber 350. The glass fiber 350 has a plurality of cores 310 arrayed in the lattice pattern with the minimum units of rectangular lattices, and a common cladding 320 surrounding each of these cores 310. A marker M for specifying array positions of the cores 310 or for discriminating an end face position is formed on the surface of the resin coat 360. In each of the optical fiber lines 200A-200N, adjacent MCFs 300 are spliced while the end faces of the glass fibers 350 thereof are fused at a junction 370, as shown in Fig. 3B. This junction portion is protected by a resin material 380 because the resin coat 360 is removed therefrom.

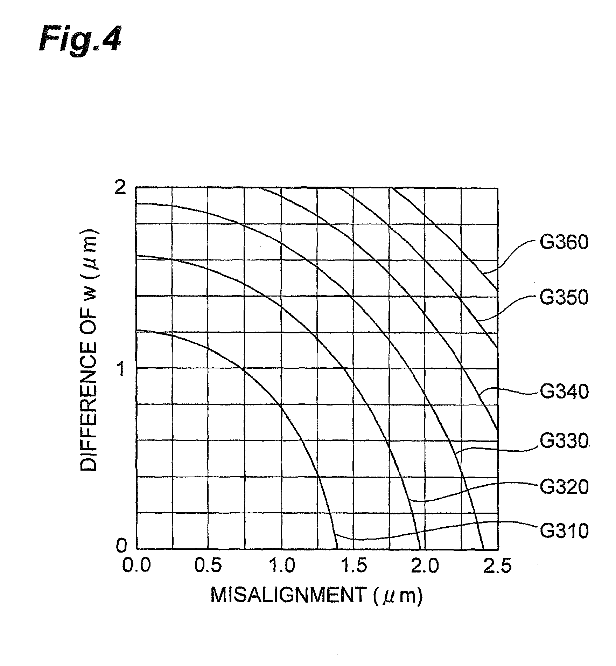

Major factors to cause splice loss in splicing between two MCFs 201 (300) are considered to be mismatch of mode field diameters or spot sizes w (half values of the mode filed diameters) and positional deviation of core centers (misalignment). Fig. 4 is a graph showing the result of provisional calculation of dependency of splice loss on difference of spot size w and misalignment. In Fig. 4 the horizontal axis represents the misalignment and the vertical axis the difference of spot size w (difference of w). Graph G310 indicates an isogram representing the splice loss 0.4 dB, Graph G320 an isogram representing the splice loss 0.8 dB, Graph G330 an isogram representing the splice loss 1.2 dB, Graph G340 an isogram representing the splice loss 1.6 dB, Graph G350 an isogram representing the splice loss 2.0 dB, and Graph G360 an isogram representing the splice loss 2.4 dB.

As seen from Fig. 4, each of the graphs G310-G360 of the respective splice losses is an approximate quarter ellipse. It was assumed in the provisional calculation that the field distribution of light propagating in each core was the Gaussian distribution, an average value of spot sizes of optical fibers to be spliced was 4.6 $\mu$m, and the mode field diameter 9.2 $\mu$m.

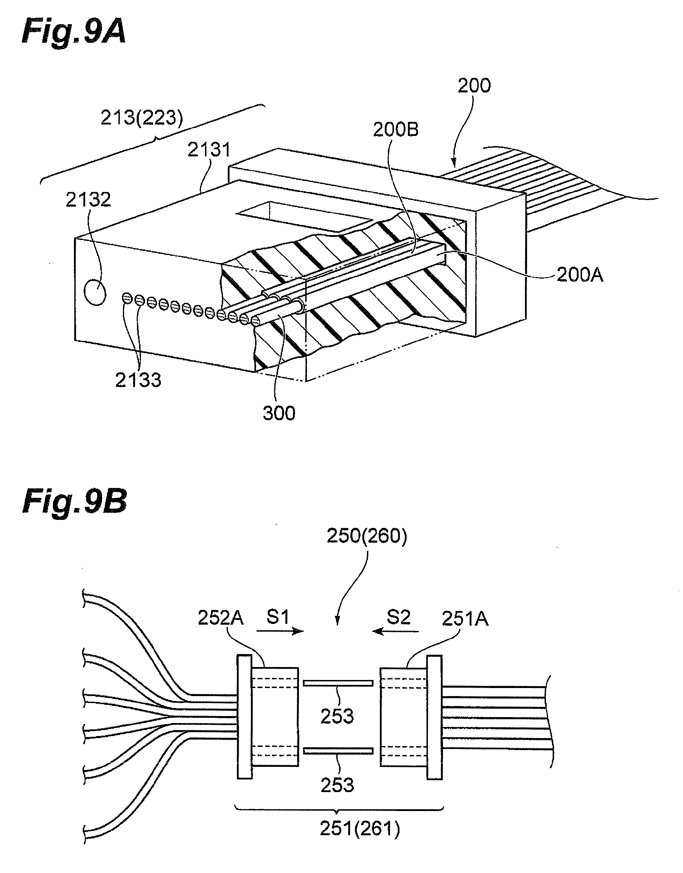

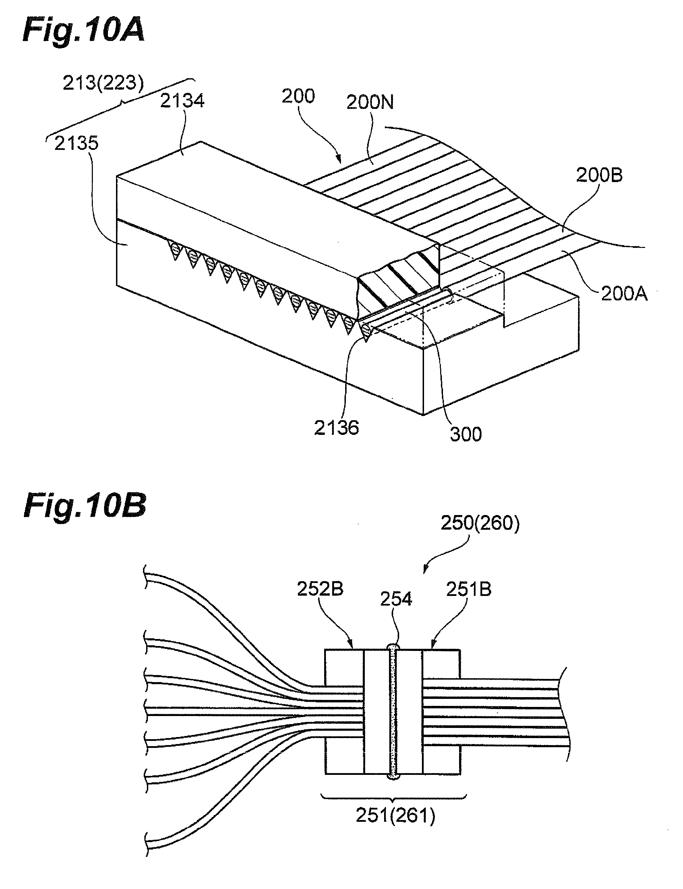

In splicing two single-core optical fibers, the two single-core optical fibers to be spliced are aligned so that the centers of the cores are matched with each other, whereby it is theoretically possible to make the amount of misalignment zero. In the case of splicing two MCFs, however, where there are differences of core pitches between the two MCFs to be spliced, even if a certain core of one MCF is aligned with a core of the other MCF so that their centers are matched, the other cores will undergo misalignment of their core centers. Therefore, it is considered that the difference of core pitches between two MCFs to be spliced defines a minimum value of the amount of misalignment in execution of splicing. From this consideration, concerning the splice loss of MCFs, the horizontal axis in Fig. 4 can be read as the difference of core pitches. On the other hand, in use of an optical connector of a hole type (Figs. 9A and 9B) or a groove type (Figs. 10A and 10B) in which a plurality of MCFs are arrayed with their central positions being fixed, a difference between a central position of the core array and a central position of the optical fiber (center difference) will make it difficult to maintain splice quality by only the core pitches. The splice quality can be ensured by also taking the center difference into consideration, as well as the difference of core pitches.

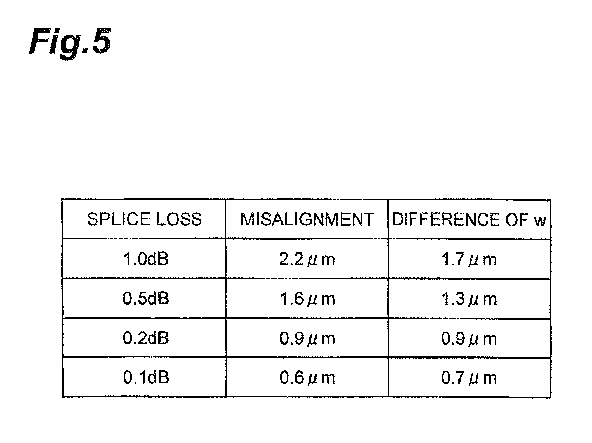

In order to keep the splice loss obtained by the provisional calculation from the core pitches of MCFs (i.e., misalignment in mutual splicing) and the difference of spot sizes w, not more than 1.0, 0.5, 0.2, or 0.1 dB, it is necessary to keep the misalignment and the difference of w inside the quarter ellipses where the respective intercepts of the misalignment and difference of w in Fig. 4 are not more than the values described in Fig. 5.

Namely, in one optical fiber line, the splice loss can be kept not more than 1.0 dB when $\Delta A$ and $\Delta w$ satisfy the relational expression of $\Delta\Lambda^2/2.2^2 + \Delta w^2/1.7^2 \le 1$, where $\Delta\Lambda$ ($\mu$m) represents a maximum deviation of a neighboring core pitch for a plurality of MCFs each being connected to each other and having the same core constellation structure and $\Delta w$ ($\mu$m) a maximum deviation of a spot size of a fundamental mode propagating in one core 310, which is a spot size at an operating wavelength. It is, however, noted that the core constellation structure of one optical fiber line may be different from that of another optical fiber line among a plurality of optical fiber lines.

The "core pitch" is defined herein as a center pitch between noncontact cores in one MCF. The "neighboring core" refers to a core adjacent at a predetermined core pitch in one MCF and, more specifically, is a core at a core pitch in the range of not more than 1.1 times a minimum core pitch (minimum center-center distance) with respect to a certain core. Furthermore, the "predetermined core pitch" means a designed core pitch and an actual core pitch is approximately coincident with the "predetermined core pitch" but may have some deviation. The "maximum deviation $\Delta\Lambda$ of the neighboring core pitch" is a maximum value of maximum deviations of neighboring core pitches in each of a plurality of MCFs constituting an optical component and, specifically, it refers to a maximum value in an optical fiber line or optical component of ("maximum of neighboring core pitches" - "minimum of neighboring core pitches") in each of a plurality of MCFs. The "maximum deviation $\Delta w$ of the spot size" refers to a maximum deviation of a spot size of each of all close cores in a plurality of MCFs constituting an optical fiber line or optical component (a spot size of a fundamental mode propagating in one core 310, which is a spot size at an operating wavelength).

With reference to the table shown in Fig. 5, each of a plurality of optical fiber lines included in the optical component of the present embodiment may be configured in modes as described below. Namely, when $\Delta \Lambda$ and $\Delta w$ satisfy the relational expression of $\Delta \Lambda^2/1.6^2 + \Delta w^2/1.3^2 \leq 1$ among a plurality of MCFs included in the optical component, the splice loss of not more than 0.5 dB can be realized. Similarly, when $\Delta \Lambda$ and $\Delta w$ satisfy the relational expression of $\Delta \Lambda^2/0.9^2 + \Delta w^2/0.9^2 \leq 1$, the splice loss of not more than 0.2 dB can be realized; when $\Delta \Lambda$ and $\Delta w$ satisfy the relational expression of $\Delta \Lambda^2/0.6^2 + \Delta w^2/0.7^2 \leq 1$, the splice loss of not more than 0.1 dB can be realized.

Therefore, even with differently-designed MCFs (provided that they have the same constellation structure), as long as one optical fiber line is constructed of a plurality of MCFs selected so as to satisfy the foregoing relational expression, it becomes feasible to keep the splice loss low between fibers in the resultant optical fiber line.

In an optical component constructed of a plurality of MCFs having a substantially identical core constellation structure, where $\Delta \Lambda_{cc}$ ($\mu$m) represents a maximum deviation of a center pitch between corresponding cores between the MCFs of the substantially identical core constellation structure and $\Delta w_a$ ($\mu$m) a maximum deviation of the spot size in the entire optical component, the splice loss of not more than 1 dB can also be realized when the optical component satisfies at least any one of relational expressions below.

$$\Delta \Lambda_{cc}^2/2.2^2 + \Delta w_a^2/1.7^2 \leq 1$$

$$\Delta \Lambda_{cc}^2/1.6^2 + \Delta w_a^2/1.3^2 \leq 1$$

$$\Delta \Lambda_{cc}^2/0.9^2 + \Delta w_a^2/0.9^2 \leq 1$$

$$\Delta \Lambda_{cc}^2/0.6^2 + \Delta w_a^2/0.7^2 \leq 1$$

In an optical component constructed of a plurality of MCFs having a substantially identical core constellation structure, where $\Delta \Lambda_d$ ($\mu$m) represents a maximum value of a deviation from a designed position of a center of each core (while the spot size is the aforementioned $\Delta w$), the splice loss of not more than 1 dB can also be realized when the optical component satisfies at least any one of relational expressions below.

$$(2\Delta \Lambda_d+1.0)^2/2.2^2 + \Delta w^2/1.7^2 \leq 1$$

$$(2\Delta \Lambda_d+1.0)^2/1.6^2 + \Delta w^2/1.3^2 \leq 1$$

$$(2\Delta \Lambda_d+0.5)^2/2.2^2 + \Delta w^2/1.7^2 \leq 1$$

$$(2\Delta \Lambda_d+0.5)^2/1.6^2 + \Delta w^2/1.3^2 \leq 1$$

$$(2\Delta \Lambda_d+0.5)^2/0.9^2 + \Delta w^2/0.9^2 \leq 1$$

One of means for reducing the difference of core pitches of MCFs is to decrease a clearance between an outer diameter of a core rod and an inner diameter of a pipe into which the core rod is inserted, when a preform for MCF is prepared by the rod-in collapse method. For example, let us consider a case where an MCF with the cladding diameter of 125 $\mu$m is manufactured by drawing the MCF preform with the diameter of 125 mm; by keeping the clearance between the core rod outer diameter and the pipe inner diameter not more than 0.3 mm on each side, the difference of core pitches after fiber drawing can be kept not more than 0.6 $\mu$m even in the worst possible case where the core rod is shifted to one side within the clearance.

On the other hand, one of means for reducing the difference of the spot size of each core is to manufacture the MCF with use of a plurality of core members obtained by dividing an identical core material into them. An example of structure design and manufacturing method of the core members is as follows: $GeO_2$ is added in silica glass so that the relative refractive-index difference to the cladding of silica glass is 0.34%, to obtain a core preform; the core preform is drawn so that the core diameter after fiber drawing becomes 8.6 $\mu$m; thereafter, it is divided into a plurality of core members. Since the identical core material is used as divided, the differences of the relative refractive-index differences and the core diameters of the respective cores are reduced, thereby making it feasible to keep the difference of the spot size of 0.7 $\mu$m corresponding to the splice loss of 0.1 dB. An optical fiber line may be made as follows: a plurality of MCFs are manufactured under the same condition with use of a fiber preform made using the identical core material; the plurality of MCFs are used to produce an optical fiber line so that the cores at the same array positions are spliced based on the markers specifying the array positions of the cores; this process allows us to construct the optical fiber line with ideal connection quality.

This structure design of the core material corresponds to the mode field diameter of 9.2 $\mu$m at the wavelength of 1310 nm, the cable cutoff wavelength of 1.16 $\mu$m, and the bending loss of not more than 0.01 dB at the wavelength of 1550 nm in a winding state of 100 turns in the bending radius of 30 mm. This conforms to the international standard of standard single-mode optical fibers (the center value of mode field diameter: 8.6-9.5 $\mu$m; the cable cutoff wavelength: not more than 1260 nm; the bending loss at the wavelength of 1550 nm in the winding state of 100 turns in the bending radius of 30 mm: not more than 0.1 dB). This allows the cores of MCFs to be spliced with low loss because they are designed with characteristics equivalent to those of standard single-mode optical fibers. The operating wavelength is assumed to be any one of the 0.85 $\mu$m band, the 1.31 $\mu$m band, and the 1.55 $\mu$m band.

The foregoing example showed the example in which the core pitch difference of MCFs was kept not more than 0.6 $\mu$m and the spot size difference was kept not more than 0.7 $\mu$m. It is sufficient, however, that the core pitch difference and the spot size difference be properly set depending upon required levels of splice loss. For example, when a certain level of splice loss is allowed, the clearance between core rod and pipe can be set larger than in the foregoing example, to facilitate insertion of the core rod into the pipe, thereby improving productivity of MCF. When a certain level of spot size difference is allowed, core structure designs of adjacent cores can be intentionally made different, thereby reducing crosstalk between the adjacent cores.

It is contemplated that in connection between optical fiber cables each including a plurality of optical fiber lines, the plurality of optical fiber lines are housed in one cable jacket. In this case as well, as long as MCFs to be spliced satisfy the aforementioned relational expression, the MCFs can be spliced with low loss, without need for selecting the MCFs to be spliced, from those in the optical fiber cables to be connected. The MCFs as spliced objects may be made identifiable by markers or the like.

By housing a plurality of MCFs in one cable jacket, it becomes feasible to significantly increase the number of cores per unit cross section in the optical fiber cable. For example, when an ordinary single-core optical fiber is applied to a 100-fiber slotted core ribbon cable with the outer diameter of 12 mm (having five slots and housing five four-fiber ribbons in each slot), the number of cores per unit cross section in the optical fiber cable is approximately 0.9 core/mm$^2$. In contrast to it, if MCFs each having seven cores are applied to one optical fiber cable, the number of cores in one optical fiber cable can be increased to 700 and the number of cores per unit cross section can be increased to about 6.2 cores/mm$^2$. Since the maximum number of cores per unit cross section in the existing optical fiber cables even with 200 fibers is about 2.1 cores/mm$^2$ (cf. Non Patent Literature 1), the effect of increase in the number of cores by the MCF cable can be said to be great. It is expected that the increase in the number of cores makes the splicing work between optical fiber cables and reduction of splice loss more difficult, but the optical component of the present embodiment enables MCFs to be spliced with low loss for the above-described reason.

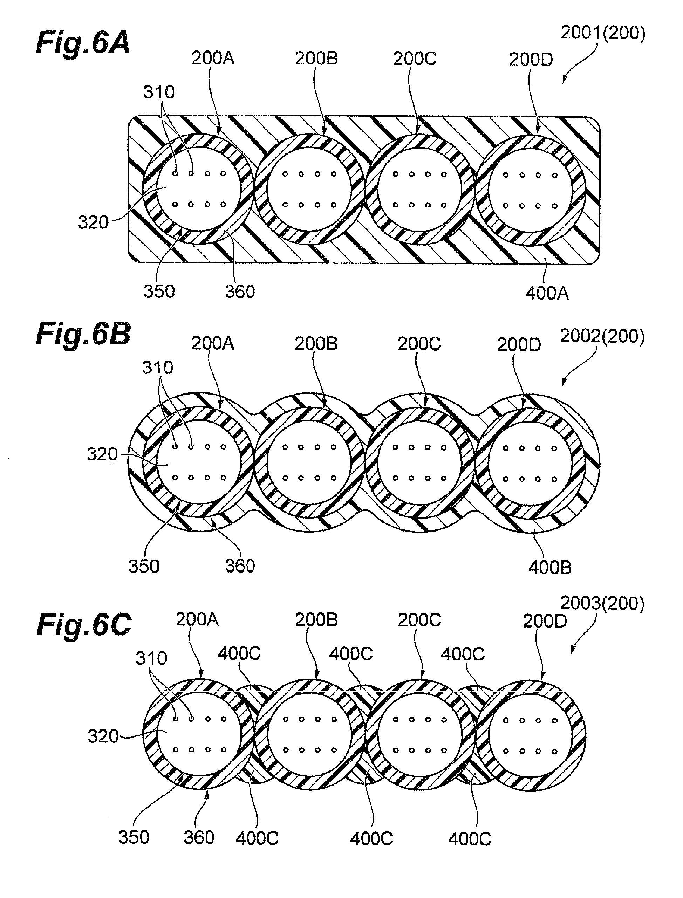

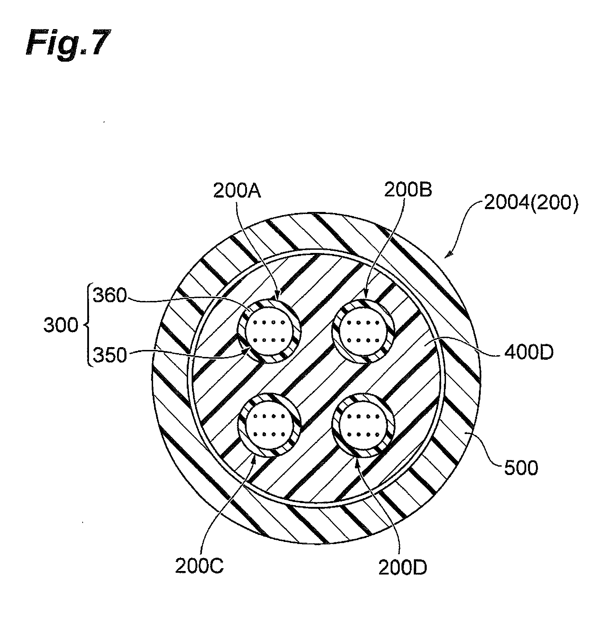

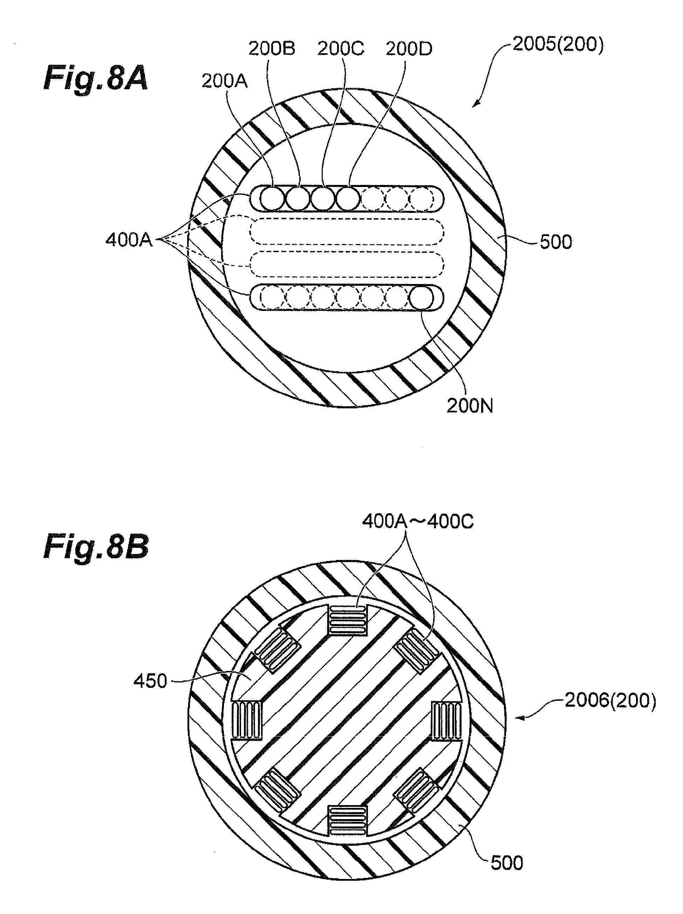

The optical component of the present embodiment including a plurality of optical fiber lines is also applicable to the optical passive elements, as well as the optical transmission line 200 in Fig. 1. Specifically, when the optical component of the present embodiment is applied to the optical transmission line 200, the optical transmission line 200 can function as an optical fiber ribbon as shown in Figs. 6A to 6C or as an optical fiber cable as shown in Figs. 7 and 8A to 8B. When the optical component of the present embodiment is applied to the optical passive elements 250, 260, etc. in Fig. 1, the optical component can function as an optical connector as shown in Figs. 9A, 9B, 10A, and 10B.

Figs. 6A to 6C are cross-sectional views showing various examples of typical structures of optical fiber ribbons as optical components according to the present embodiment. Specifically, the optical fiber ribbon 2001 shown in Fig. 6A (which corresponds, for example, to the optical transmission line 200) has a first retention structure 400A of a resin material which integrally retains each of optical fiber lines 200A-200D while maintaining the positional relation on a plane perpendicular to the longitudinal direction, of each of the optical fiber lines 200A-200D. In this optical fiber ribbon 2001, the first retention structure 400A has an approximately rectangular sectional structure. Each MCF in the optical fiber lines 200A-200D has a glass fiber 350 and a resin coat 360 provided on the outer peripheral surface of the glass fiber 350. The glass fiber 350 has a plurality of cores 310 arrayed in a lattice pattern with the minimum units of rectangular lattices, and a common cladding 320 covering each of the cores 310.

The optical fiber ribbon 2002 shown in Fig. 6B has a first retention structure 400B of a resin material which integrally retains each of optical fiber lines 200A-200D while maintaining the positional relation on a plane perpendicular to the longitudinal direction, of each of the optical fiber lines 200A-200D. This first retention structure 400B has an uneven sectional structure following the sectional shape of each of the optical fiber lines 200A-200D.

Furthermore, the optical fiber ribbon 2003 shown in Fig. 6C also has a first retention structure 400C of a resin material which retains each of optical fiber lines 200A-200D while maintaining the positional relation on a plane perpendicular to the longitudinal direction, of each of the optical fiber lines 200A-200D. However, the first retention structure 400C is different from the foregoing first retention structures 400A, 400B in that the first retention structure 400C retains the positional relation of only the MCFs of adjacent optical fiber lines.

The optical fiber cable shown in Fig. 7 is also applicable to the optical component according to the present embodiment. The optical fiber cable 2004 shown in Fig. 7 is constructed as follows: the optical fiber lines 200A to 200D are housed in a cable jacket 500; a first retention structure 400D maintains positions of these optical fiber lines 200A-200D in the cable jacket 500.

In Figs. 6A to 6C and Fig. 7, the optical fiber cable or ribbon is configured in the state in which the positional relation of the optical fibers is maintained and the splice quality can be managed as being limited only to the optical fibers in correspondence. The optical fiber cable or optical fiber ribbon may be one with the positional relation being not maintained, as long as the setting is done as intended for all the optical fibers of both optical fiber cables or optical fiber ribbons so as to ensure the splice quality even between the optical fibers in no correspondence.

Furthermore, an optical fiber cable wherein the optical fiber cables shown in Figs. 6A to 6C are housed in a cable jacket 500 is also applicable to the optical component according to the present embodiment. For example, an optical fiber cable 2005 shown in Fig. 8A is constructed so that a plurality of optical fiber ribbons each having the same structure as the optical fiber ribbon 2001 in Fig. 6A are housed in the cable jacket 500. The optical fiber lines 200A-200N in the optical fiber cable 2005 are divided into a plurality of groups and each group constitutes an optical fiber ribbon. Namely, a plurality of optical fiber lines belonging to one group are integrally retained by the first retention structure 400A, thereby constituting an optical fiber ribbon.

An optical fiber cable 2006 shown in Fig. 8B is also constructed so that a plurality of optical fiber ribbons are housed in the cable jacket 500, but the optical fiber cable 2006 is different from the optical fiber cable 2005 in that the optical fiber cable 2006 further has a second retention structure 450 which retains these optical fiber ribbons as separated in a plurality of groups at predetermined positions in the cable jacket 500. Namely, in the optical fiber cable 2006, the second retention structure 450 is a slotted rod and a plurality of optical fiber ribbons are housed in a stacked state in each slot. The first retention structure for the optical fiber ribbons housed in each slot may be any one of the first retention structures 400A-400C shown in Figs. 6A to 6C.

Furthermore, the first retention structure of the optical component according to the present embodiment may be, for example, a connector component (connection component) as shown in Fig. 9A or in Fig. 10A. The connector component in Fig. 9A can function as a part of the optical connector 213, 223 shown in Fig. 1 and, by making use of such a connector component, it is also possible to construct the optical connector 251, 261 included in the optical passive element 250, 260 shown in Fig. 9B. The connector component in Fig. 10A can also function as a part of the optical connector 213, 223 shown in Fig. 1 and, by making use of such a connector component, it is also possible to construct the optical connector 251, 261 included in the optical passive element 250, 260 shown in Fig. 10B.

Specifically, the connector component 2131 in Fig. 9A has a plurality of holes 2133 into which ends of MCFs 300 of the respective optical fiber lines 200A-200N are inserted, and guide pin holes 2132. As shown in Fig. 9B, the optical connector 251, 261 in the optical passive element 250, 260 is obtained by moving connector components 251A, 252A each having the structure shown in Fig. 9A, in directions indicated by arrows S1, S2 along the guide pins 253. The optical fiber ribbons 2001-2003 shown in Figs. 6A to 6C are suitably applicable to the optical transmission line 200 including the optical fiber lines 200A-200N. The connection between the connector components may be implemented by use of a receptacle, instead of the guide pins.

Furthermore, the connector component (connection component) in Fig. 10A has a pedestal 2135 having a plurality of grooves 2136 in which ends of MCFs 300 of the respective optical fiber lines 200A-200N are set, and a fixing member 2134 which is fixed with adhesive to the pedestal 2135 so as to fix the ends of MCFs 300 in a state in which they are set in the respective grooves 2136. As shown in Fig. 10B, the optical connector 251, 261 in the optical passive element 250, 260 is obtained by fixing end faces of respective connector components 251B, 252B each having the structure shown in Fig. 10A, with adhesive 254 in between. The optical fiber ribbons 2001-2003 shown in Figs. 6A to 6C are suitably applicable to the optical transmission line 200 including the optical fiber lines 200A-200N, but it is also possible to apply the optical fiber cables 2004-2006 shown in Figs. 7, 8A, and 8B.

List of Reference Signs

200 optical transmission line; 200A-200N optical fiber lines; 201 multi-core optical fiber; 212A-212N, 250, 260 optical passive elements; 212A-212N optical joints; 222A-222N optical branching devices; 213, 251, 223, 261 optical connectors (connection components); 2001-2003 (200) optical fiber ribbons; and 2004-2006 (200) optical fiber cables.

**Claims**

1. An optical component having a plurality of MCFs, the optical component satisfying at least any one of relational expressions (1) to (4) below:

$$\Delta \Lambda^2/2.2^2 + \Delta w^2/1.7^2 \leq 1 \qquad (1);$$

$$\Delta \Lambda^2/1.6^2 + \Delta w^2/1.3^2 \leq 1 \qquad (2);$$

$$\Delta \Lambda^2/0.9^2 + \Delta w^2/0.9^2 \leq 1 \qquad (3);$$

$$\Delta \Lambda^2/0.6^2 + \Delta w^2/0.7^2 \leq 1 \qquad (4),$$

where in a core array in each of the plurality of MCFs, $\Delta \Lambda$ ($\mu$m) represents a maximum deviation of a core pitch between neighboring cores defined by a core center-center distance between adjacent cores located at closest positions and $\Delta w$ ($\mu$m) a maximum deviation of a spot size of a fundamental mode at an operating wavelength.

2. The optical component according to Claim 1, wherein a core structure and the core array in each of the plurality of MCFs are such that a deviation from a target position, of a position of each core with respect to a fiber center axis is not more than a predetermined value and a deviation from a target size, of the spot size in each core is not more than a predetermined value.

3. The optical component according to Claim 1 or 2, wherein each of the plurality of MCFs has a core constellation structure identical with that of another MCF to be connected thereto, and has a marker for confirmation of an end face position of the MCF.

4. The optical component according to any one of Claims 1 to 3, wherein the core pitch between the neighboring cores is not more than 1.1 times a minimum core center-center distance in the core array.

5. The optical component according to any one of Claims 1 to 4, wherein each of the plurality of MCFs has a core constellation structure of a lattice pattern.

6. The optical component according to any one of Claims 1 to 5, wherein in each of the plurality of MCFs, an optical characteristic at a wavelength of 1310 nm is such that each of the plurality of cores has a mode field diameter of not less than 8.0 $\mu$m and not more than 10.1 $\mu$m or such that an average value of mode field diameters of all the cores is not less than 8.6 $\mu$m and not more than 9.5 $\mu$m.

7. The optical component according to any one of Claims 1 to 6, wherein in each of the plurality of MCFs, a cable cutoff wavelength of each of the plurality of cores is not more than 1260 nm.

8. The optical component according to any one of Claims 1 to 7, wherein in each of the plurality of MCFs, each of the plurality of cores has a bending loss of not more than 0.1 dB in a winding state of 100 turns in a bending radius of 30 mm, as an optical characteristic at a wavelength of 1550 nm.

9. The optical component according to any one of Claims 1 to 8, wherein the operating wavelength is any one of a 0.85 $\mu$m band, a 1.31 $\mu$m band, and a 1.55 $\mu$m band.

10. The optical component according to any one of Claims 1 to 9, which is an optical fiber line internally housing the plurality of MCFs, or, a line wherein a plurality of optical fiber lines each internally housing the plurality of MCFs are optically connected.

**11.** The optical component according to any one of Claims 1 to 9, comprising a first retention structure for retaining each of a plurality of optical fiber lines, the optical fiber lines each being constructed by optically connecting the plurality of MCFs and extending along a predetermined longitudinal direction, in a state in which the first retention structure maintains a positional relation on a plane perpendicular to the longitudinal direction, of each of the plurality of optical fiber lines.

**12.** The optical component according to Claim 11, wherein a core constellation structure of each of a plurality of MCFs constituting any optical fiber line out of the plurality of optical fiber lines is different from a core constellation structure of each of a plurality of MCFs constituting another optical fiber line out of the plurality of optical fiber lines.

**13.** The optical component according to Claim 11 or 12, wherein the first retention structure includes a resin material for retaining a space between at least adjacent optical fiber lines out of the plurality of optical fiber lines.

**14.** The optical component according to any one of Claims 11 to 13, comprising a jacket internally housing each of the plurality of optical fiber lines, together with the first retention structure.

**15.** The optical component according to Claim 14, comprising a second retention structure for retaining the first retention structure housed in the jacket with the positional relation of each of the plurality of optical fiber lines being retained, at a predetermined position in the jacket.

**16.** The optical component according to any one of Claims 1 to 9, which is a connection component for retaining ends of the plurality of MCFs each extending along a predetermined longitudinal direction, in a state in which the connection component maintains a positional relation of the ends on a plane perpendicular to the longitudinal direction.

**17.** The optical component according to Claim 16, wherein the connection component retains each of the plurality of MCFs in an aligned state of an orientation, a height, and a pitch of a core constellation structure.

**18.** The optical component according to Claim 16 or 17, wherein the connection component includes a plurality of holes or grooves for retaining the plurality of MCFs.

**19.** The optical component according to Claim 17, wherein core constellation structures in the plurality of MCFs are substantially identical, and wherein the connection component as the optical component satisfies at least any one of relational expressions (5) to (8) below:

$$\Delta\Lambda_{cc}^{2}/2.2^{2} + \Delta w_{a}^{2}/1.7^{2} \leq 1 \qquad (5);$$

$$\Delta\Lambda_{cc}^{2}/1.6^{2} + \Delta w_{a}^{2}/1.3^{2} \leq 1 \qquad (6);$$

$$\Delta\Lambda_{cc}^{2}/0.9^{2} + \Delta w_{a}^{2}/0.9^{2} \leq 1 \qquad (7);$$

$$\Delta\Lambda_{cc}^{2}/0.6^{2} + \Delta w_{a}^{2}/0.7^{2} \leq 1 \qquad (8),$$

where $\Delta\Lambda_{cc}$ ($\mu$m) represents a maximum deviation of a center pitch between corresponding cores between the MCFs of the substantially identical core constellation structure and $\Delta w_{a}$ ($\mu$m) a maximum deviation of the spot size in the entire optical component.

**20.** The optical component according to Claim 16 or 17, wherein core constellation structures in the plurality of MCFs are substantially identical, and wherein the connection component as the optical component satisfies at least any one of relational expressions (9) to (13) below:

$$(2\Delta\Lambda_d+1.0)^2/2.2^2 + \Delta w^2/1.7^2 \le 1 \qquad (9);$$

$$(2\Delta\Lambda_d+1.0)^2/1.6^2 + \Delta w^2/1.3^2 \le 1 \qquad (10);$$

$$(2\Delta\Lambda_d+0.5)^2/2.2^2 + \Delta w^2/1.7^2 \le 1 \qquad (11);$$

$$(2\Delta\Lambda_d+0.5)^2/1.6^2 + \Delta w^2/1.3^2 \le 1 \qquad (12);$$

$$(2\Delta\Lambda_d+0.5)^2/0.9^2 + \Delta w^2/0.9^2 \le 1 \qquad (13),$$

where $\Delta\Lambda_d$ ($\mu$m) represents a maximum value of a deviation from a designed position of a center of each core.

21. An optical communication system comprising the optical component as set forth in any one of Claims 1 to 20, as an optical transmission line or as an optical passive element.

*Fig.1*

*Fig.2A*

200A~200N

A      B      C      D      E

201      201      201      201      201

320    A      320    B      320    C      320    D      320    E

310      310      310      310      310

$\Lambda_A$      $\Lambda_B$      $\Lambda_C$      $\Lambda_D$      $\Lambda_E$

*Fig.2B*     *Fig.2C*     *Fig.2D*     *Fig.2E*     *Fig.2F*

## Fig.3A

## Fig.3B

# Fig.4

# Fig.5

| SPLICE LOSS | MISALIGNMENT | DIFFERENCE OF w |
|:---:|:---:|:---:|
| 1.0dB | 2.2 $\mu$m | 1.7 $\mu$m |
| 0.5dB | 1.6 $\mu$m | 1.3 $\mu$m |
| 0.2dB | 0.9 $\mu$m | 0.9 $\mu$m |
| 0.1dB | 0.6 $\mu$m | 0.7 $\mu$m |

**Fig.6A**

**Fig.6B**

**Fig.6C**

## Fig.7

*Fig.8A*

200B 200C 200D
200A
2005(200)
400A
500
200N

*Fig.8B*

400A~400C
450
2006(200)
500

## *Fig.9A*

## *Fig.9B*

## Fig.10A

## Fig.10B

**INTERNATIONAL SEARCH REPORT**

| International application No. |
|---|
| PCT/JP2014/050353 |

A.  CLASSIFICATION OF SUBJECT MATTER
*G02B6/04*(2006.01)i, *G02B6/02*(2006.01)i, *G02B6/38*(2006.01)i, *G02B6/44* (2006.01)i

According to International Patent Classification (IPC) or to both national classification and IPC

B.  FIELDS SEARCHED

Minimum documentation searched (classification system followed by classification symbols)
G02B6/04, G02B6/02, G02B6/38, G02B6/44

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
JSTPlus(JDreamIII), JST7580(JDreamIII)

C.  DOCUMENTS CONSIDERED TO BE RELEVANT

| Category* | Citation of document, with indication, where appropriate, of the relevant passages | Relevant to claim No. |
|---|---|---|
| Y | JP 2012-118495 A  (Fujikura Ltd.), 21 June 2012 (21.06.2012), paragraphs [0047], [0048], [0052] to [0055]; tables 1, 2 & WO 2012/063775 A1 | 1-21 |
| Y | JP 10-104443 A  (Nippon Telegraph and Telephone Corp.), 24 April 1998 (24.04.1998), paragraph [0011]; fig. 7 (Family: none) | 1-15,21 |

☒  Further documents are listed in the continuation of Box C.　　　☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 January, 2014 (22.01.14) | 04 February, 2014 (04.02.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/050353

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2011/116137 A1   (OFS FITEL LLC. A DELAWARE LIMITED LIABILITY COMPANY), 22 September 2011 (22.09.2011), page 9, lines 7 to 10; fig. 3, 4 & JP 2013-522680 A       & US 2011/0229086 A1 & EP 2548068 A | 1-9,16-21 |
| A | Microfilm of the specification and drawings annexed to the request of Japanese Utility Model Application No. 106864/1981(Laid-open No. 13505/1983) (Nippon Telegraph & Telephone Public Corp.), 27 January 1983 (27.01.1983), page 2, line 18 to page 3, line 18; fig. 3 to 5 (Family: none) | 3 |
| A | Jitsumu ni Yakudatsu Hikari Fiber Gijutsu 200 no Point, revised edition 3rd print, 10 July 1998 (10.07.1998), pages 94 to 95 | 14,15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *NTT Technical Journal,* 2012, vol. 9, 88-89